(19) Europäisches Patentamt
European Patent Office
Office européen des brevets

(11) Publication number: **0 313 861 A1**

(12) # EUROPEAN PATENT APPLICATION

(21) Application number: 88116250.7

(51) Int. Cl.4: C08G 69/40 , C08G 69/28

(22) Date of filing: 30.09.88

(30) Priority: 29.10.87 US 114431

(43) Date of publication of application: 03.05.89 Bulletin 89/18

(84) Designated Contracting States: DE FR GB IT NL

(71) Applicant: **GENERAL ELECTRIC COMPANY**
**1 River Road**
**Schenectady New York 12305(US)**

(72) Inventor: **Blackmon, Kenneth Paul**
**423 Dalton Avenue**
**Pittsfield Massachusetts 01201(US)**
Inventor: **Shafer, Sheldon Jay**
**40 Day Street**
**Pittsfield Massachusetts 01201(US)**

(74) Representative: **Catherine, Alain**
**General Electric France Service de Propriété Industrielle 18 Rue Horace Vernet B.P. 76**
**F-92134 Issy-les-Moulineaux Cédex(FR)**

(54) **Amide-etheramide copolymers and process for the preparation thereof.**

(57) Copolymers comprising amide units and polyether units connected by amide linkages are prepared by melt phase interchange of diaryl esters of dicarboxylic acids and polyoxyalkylenediamines and then with alkylene or cycloalkylenediamines. The products of the process are tough resins, useful per se as molding compounds, especially as thermoplastic elastomers, as fabric coatings, as hot melt adhesives, and to toughen other thermoplastic polymers.

EP 0 313 861 A1

## AMIDE-ETHERAMIDE COPOLYMERS AND PROCESS FOR THE PREPARATION THEREOF

The present invention relates to copolymer resins, to thermoplastic compositions comprising them, and to processes useful in their production. More particularly, it is concerned with copolymers comprising polyamide segments and polyether segments, connected by amide linkages and substantially free of ester linkages, with thermoplastic elastomers, with molding compositions comprising such copolymers and a melt phase process for their production by interchange of diaryl esters with diamines.

### BACKGROUND OF THE INVENTION

Block copolymers having the general formula

$$\left( \overset{O}{\overset{\|}{C}} \text{-A-} \overset{O}{\overset{\|}{C}} \text{-O-B-O} \right)_n —$$

wherein A is a polyamide sequence and B is a polyoxyalkylene glycol sequence and n is the number of recurrent units are known from Deleens et al, U.S. 4,208,493 and Borg et al, U.S. 4,361,680. They are used, for example, in compositions useful for molding, extrusion or drawing. They are also good hot melt adhesives. Unfortunately, the stability of such materials, are represented by a degradation in strength after exposure to moisture, is less than desirable. It is believed that this is due to the presence of ester linkages, i.e.,
$- \overset{O}{\overset{\|}{C}} \text{-O-}$. German OL 2,146,162 describes mixed polyamides made by condensing a mixture of diamines and polyether diamines with a polymeric fatty acid. These are not block copolymers and they are neither tough nor transparent and these qualities represent drawbacks in the formation of films and other extrudates. Japanese Patent Publication No. Sho 61 (1980) 37840, describes polyamide composites consisting of polyamide and up to about 10 percent by weight of a polypropylene ether diamine. The composites are said to have improved elongation and impact strength and better moldability then prior art composites. The polypropylene ether diamine is apparently employed to extend the polyamide chains, but not to introduce soft resin segments. The products were crystalline and therefore not transparent. Japanese Patent Publication Sho 59 (1984) -75925 also deals with the production of impact resistant polyamides by polymerizing omega-lactams in the presence of an anionic polymerization catalyst, a cyclic urea derivative, and a number of difunctional compounds, among which are disclosed polyoxyethylene diamine and polyoxypropylene diamine. In addition to using a process which is difficult to carry out industrially, the products obtained by the invention of this Japanese Patent Publication are resins which contain urea groups and no soft segments comprising a polyamide of the polyoxyalkylene diamine. Fox and Shafer, U.S. 4,567,249, disclose the melt preparation of polyamides by amine ester interchange. For example, if a diphenyl ester of isophthalic or terephthalic acid is mixed with a diamine such as hexamethylenediamine and heated above the liquification point of the monomers, phenol will be smoothly evolved, and a high molecular weight polyamide will be produced. There is no suggestion in the Fox and Shafer patent to employ the process in two stages, employing different amines in each stage.

It has now been discovered that copolymers of polyamide and polyoxyalkylene amides can be prepared, that do not contain ester linkages. The process of the Fox and Shafer patent is especially useful to prepare such copolymers. The products of the processes are surprisingly tough, thermally stable and, in some cases, are transparent. This makes them very suitable for many uses, especially as thermoplastic elastomers. The copolymers, processes to make them and compositions comprising them are the subject matter of the invention.

### SUMMARY OF THE INVENTION

According to the present invention, there are provided amide ether block copolymers connected by amide linkages and substantially free of ester linkages, and being of the general formula

$$\left[\left(\underset{A}{\overset{O}{\overset{\|}{C}}-E-\overset{O}{\overset{\|}{C}}-NH-G-HN}\right)_x\left(\underset{B}{\overset{O}{\overset{\|}{C}}-E-\overset{O}{\overset{\|}{C}}-NH-Q-(OQ)_n-NH}\right)_y\right]_z$$

wherein units A comprise amide units from about 40 to about 95 percent by weight of said copolymer and units B comprise soft polyether segments comprising from about 60 to about 5 percent by weight of said copolymer, E is selected from divalent alkyl, aryl, cycloalkyl, aralkyl and alkylaryl groups of from 2 to 30 carbons atoms or a mixture of any of the foregoing, optionally substituted with at least one of chlorine, bromine, fluorine, nitro, nitrile, alkyl of from 1 to 6 carbon atoms, alkoxy of from 1 to 6 carbon atoms, or aryl of from 6 to 20 carbon atoms, G is a divalent alkyl, aryl, cycloalkyl, aralkyl or aralkyl group of from about 2 to 30 carbon atoms optionally interrupted with alkylene, arylene, carbonyl, ether, amino or sulfur-containing groups and optionally substituted with at least one of chlorine, bromine, fluorine, nitro, nitrile, alkyl of from 1 to 6 carbon atoms, alkoxy of from 1 to 6 carbon atoms or aryl of from 6 to 20 carbon atoms, Q is a linear or branched divalent alkyl or cycloalkyl group in which the group contains from about 2 to about 15 carbon atoms n is a whole number of from about 2 to about 500 and x, y and z are each from 1 to 500. The copolymers can comprise random copolymers, block copolymers and sequential block copolymers.

Also provided by the present invention is a process to make the copolymers above defined, said process comprising

(1) heating a mixture of a large excess of at least one diaryl ester of a dicarboxylic acid of the formula

$$Ar\text{-}O\text{-}\overset{O}{\overset{\|}{C}}\text{-}E\text{-}\overset{O}{\overset{\|}{C}}\text{-}O\text{-}Ar$$

wherein Ar represents the residue of an aromatic phenol optionally substituted with at least one of fluorine chlorine, bromine, nitro, nitrile, alkyl of from 1 to 6 carbon atoms, alkoxy of from 1 to 6 carbon atoms, or a mixture thereof and E is as above defined, with an amino group terminated polyether glycol of the formula

$$R^2\ HN\text{-}Q\text{-}(OQ)\text{-}_nNH\ R^2$$

wherein Q and n are as above defined and $R^2$ is hydrogen or alkyl of from 1-10 carbon atoms and

(2) adding to the product of step (1) an amine of the formula

$$R^2HN\text{-}G\text{-}NHR^2$$

wherein G is as above defined and $R^2$ is as above defined, heating the mixture at a temperature above which a homogeneous melt is obtained until formation of said amide ether block copolymer is substantially complete.

Among the preferred features of the invention are thermoplastic elastomers prepared by the melt phase process of the invention. Such block copolymers are extrudable into shaped articles which are tough, thermally stable and resistant to hydrolysis. They also are useful as blending resins, for example, to improve the impact strength of amorphous nylon, for coating of fabrics to produce breathable composites, as hot melt adhesives, and for many other important purposes.

## DETAILED DESCRIPTION OF THE INVENTION

As examples of diamines particularly suitable for use in preparing the A units can be mentioned diprimary and disecondary as well as mixed primary and secondary diamines of the general formula above. Illustrative examples are ethylenediamine, propylenediamine, 1,4-tetramethylenediamine, pentamethylenediamine, 2-methylpentamethylenediamine, hexamethylenediamine, isomeric trimethylhexamethylenediamine, 1,12-diaminododecane, bis(4-aminocyclohexyl)methane, 1,3-bis(aminomethyl)-cyclohexane, 1,4-bis(aminomethyl)cyclohexane, 1,4-piperazine, mixtures thereof and the like. Also, meta-

phenylene diamine, para-phenylenediamine, meta-xylylenediamine, paraxylylenediamine, mixtures of any of them, and the like.

Illustratively useful suitable sources for structural units E are diaryl esters of dicarboxylic acids, including diphenylic esters, derived from phenolic compounds, e.g., a monohydric phenol, including phenol itself, and alkylor halo-substituted phenols, such as o-, mand p-cresols, and o and p-chlorophenol, and the like, and a dicarboxylic acid, e.g. adipic, sebacic, glutaric, phthalic, isophthalic or terephthalic naphthalenedicarboxylic, bisphenylene dicarboxylic acids, and the like. A preferred family of diesters comprise the diphenylic esters of terephthalic acid, isophthalic acid, and mixtures thereof. Copolymers containing units derived from isophthalic acid tend to be more transparent.

The polyoxyalkylene compounds with primary and/or secondary amine end groups contain units in which the alkylene radical contains from about 2 to about 15 carbon atoms, straight chain, branched or cyclic, such as ethylene, propylene, butylene, amylene, isoamylene, cyclohexylene and the like, but is preferably ethylene or 1-methyethylene (propylene). The number of repeating units in the chain can range from about 2 to about 450, but is preferably from about 2 to about 100, and, most preferably, from about 2 to about 70

The weight ratios of A and B can vary within broad limits, e.g., from 1 to 99 of A to correspondingly 99 to 1 of B, but for most purposes the weight percentage of B will comprise from about 5 to about 50 and, more preferably from about 15 to about 45 percent by weight of the copolymer. These amounts can be achieved by using appropriate weights of the ingredients in accordance with techniques known in this art. The ingredients employed are available commercially and they also can be made by those skilled in this art. The polyoxyalkylene diamines, for example, are available from Texaco, Inc., U.S.A. under the trademark JEFFAMINE®. The designations D-230, 400, 2000, 4000, designate polyoxypropylene diamines with the rubber designating the approximate molecular weight of the polyether. The designation "ED" used in this connection is polyoxyethylene diamine, with ED 600, 900, 2001, 4000 and 6000 again designating the approximate molecular weight of the polyether.

In general the process of the invention is carried out by charging a mixture of a large excess, e.g., 4 to 100 times or more of the calculated amount of the diaryl ester, and the polyoxyalkylene diamine into a reactor and heating the reactants until all are melted. The ester-amine interchange reaction occurs smoothly and rapidly at temperatures in the range of from about 90° C to about 350° C and at pressures from supra-atmospheric down to sub-atmospheric. Next, the diamine is added and heating is continued until the reaction is completed. Usually about one hour additional time at 180° C is more than adequate. The byproduct phenolic compound can be removed in any convenient manner, such as by vacuum devolatilization, or by solvent extraction, e.g., with toluene. The resulting copolymer resin can be recovered in conventional manner, for example, as a residue after vacuum devolatilization, or by precipitation from a solvent by means of an anti-solvent, such as methanol. If the stages are alternated, alternating copolymers will be obtained.

The products of the process may be molded in any desired shape and are useful as structural and engineering thermoplastic elastomer materials to replace metal parts in a variety of applications, as stand alone resins, in blends with other resins such as amorphous nylons, as tie resins to bond two different resin layers, for coatings of fabrics to produce breathable composites, as hot melt adhesives, and many other purposes.

## DESCRIPTION OF THE PREFERRED EMBODIMENTS

The following examples illustrate the invention. They are not to be construed to limit the claims in any manner whatsoever.

### EXAMPLE 1

Diphenyl isophthalate, 159.1 g, 0.50 mol, and 63.0 g, 0.03 mol of polyoxypropylene diamine of approximately 2000 molecular weight, JEFFAMINE® D-2000, are charged to a 500 ml, 3-necked flask fitted with a mechanical stirrer and nitrogen inlet. The flask is placed in a 180° C oil bath for about 1 hour, after which the flask is raised to allow some cooling. Next, 552 g, 0.475 mol, of molten hexamethylenediamine is added and the flask is returned to the 180° C oil bath for about 1 hour. The condensation by-product,

phenol, is removed by vacuum devolatilization. Alternatively, the phenol is extracted with toluene in a Soxhlet apparatus. The resulting polyamide-polyetheramide resin is transparent, tough and elastomeric in nature, having an intrinsic viscosity, IV, of 0.85 dl/g and a glass transition temperature, Tg, of 117 °C. It contains about 35 percent by weight of polyetheramide blocks.

## EXAMPLE 2

The general procedure of Example 1 is repeated with 35 percent by weight of the block copolymer comprising units derived from a polyoxypropylene diamine of approximate molecular weight of 230. The copolymer product has an IV of about 0.42 dl/g.

## EXAMPLE 3

The general procedure of Example 1 is repeated with 35 percent by weight of the block copolymer comprising units derived from a polyoxypropylene diamine of approximate molecular weight of 400. A block copolymer in accordance with this invention is obtained.

## EXAMPLES 4 - 6

The general procedure of Example 1 is repeated with 35, 40 and 45 percent by weight of the block copolymer comprising units derived from a polyoxypropylene diamine of approximate molecular weight 2000. The copolymer products have IV's of 0.996 dl/g, 0.984 dl/g and 0.936 dl/g, respectively.

## EXAMPLES 7 AND 8

The procedure of Example 1 is repeated with 25 and 35 percent by weight of block copolymer of a diamine comprising units derived from a polyoxypropylene diamine of approximate molecular weight 4000. The copolymer products have IV's of 1.139 dl/g and 0.665 dl/g, respectively.

## EXAMPLES 9 - 11

The procedure of Example 1 is repeated with 35 percent by weight of block copolymer comprising units derived from a polyoxyethylene diamine of approximate molecular weights 600, 900 and 2001, respectively. The copolymer products have IV's of 0.35 dl/g/, 0.576 dl/g and 1.10, respectively.

## EXAMPLE 12

The procedure of Example 1 is repeated with 45 percent by weight of block copolymer of a comprising units derived from a diamine of a polyoxyethylene of approximate molecular weight 2001. The copolymer product has an IV of 0.931 dl/g.

## EXAMPLES 13 - 14

The procedure of Example 1 is repeated with 35 percent by weight of block copolymer comprising units

derived from polyoxyethylene diamine of molecular weights 4000 and 6000. The copolymer products have IV's of 0.886 dl/g and 1.193 dl/g, respectively.

EXAMPLES 15 - 16

The procedure of Example 1 is repeated, substituting for the hexamethylenediamine, 1,3-bis-(aminomethyl)cyclohexane and 1,4-bis(aminomethyl) cyclohexane and using 35 percent by weight of block copolymer of units derived from a diamine comprising polyoxypropylene diamine of approximate molecular weight 2000. The copolymer has IV's of 0.608 and 0.472 dl/g, respectively. The latter product is a crystalline material.

EXAMPLE 17

The procedure of Example 15 and 16 is repeated, substituting piperazine for the 1,3 and 1,4-bis-(aminomethyl)cyclohexane. The copolymer product had an IV of 0.470 dl/g.

EXAMPLE 18 - 19

The procedure of Example 1 is repeated, substituting p,p′-diaminocycylohexylmethane (PACM ("20")) and (PACM ("50")), the latter having a different isomer ratio, and containing 35 percent by weight of units derived from a diamine comprising polyoxypropylene diamine of approximate molecular weight 2000. The copolymer product has an IV of 0.609 dl/g when made from PACM ("20").

EXAMPLE 20

The procedure of Example 1 is repeated, substituting a 50-50 weight/weight mixture of diphenyl isophthalate and diphenyl terephthalate for the diphenyl isophthalate and 35 percent by weight of block copolymer of units derived from a diamine comprising polyoxypropylene diamine of approximate molecular weight 2000. A copolymer according to this invention is obtained.

EXAMPLE 21

A thermoplastic elastomer prepared in accordance with the procedure of Example 1 from diphenyl isophthalate, hexamethylene diamine and 35 weight percent in the polymer of polyoxypropylene diamine of approximate molecular weight of 2000, I.V. of about .70 dl/g is injection molded and tested by ASTM procedures. The transparent, chemically resistant molded articles have a tensile yield strength of 4,600 psi; a tensile break strength of 5,800 psi; a tensile modulus of 56,900 psi; an elongation at yield of 35-50%; an elongation at break of 125%; a flexural modulus of 64,000 psi and a notched Izod impact strength of 11.3 ft-lbs/in notch.

EXAMPLE 22

The procedure of Example 1 is repeated, except that all of the ingredients are initially charged, and the reaction is carried out in one stage. A random copolymer in accordance with this invention is obtained.

The above-mentioned patents, publications and test methods are incorporated herein by reference.

Many variations of this invention will suggest themselves to those skilled in this art in light of the above,

detailed description. For example, instead of diphenyl isophthalate, the following diaryl esters can be used, diphenyl adipate, diphenyl sebacate, diphenyl glutarate, mixtures of the foregoing, and the like. Instead of hexamethylenediamine and the other diamines used, the following may be substituted: ethylenediamine, trimethylenediamine, tetramethylenediamine, pentamethylenediamine, 2-methylpentamethylenediamine, isomeric trimethylhexamethylenediamine, meta-phenylenediamine, para-phenylenediamine, meta-xylylenediamine, para-xylylenediamine, mixtures of any of the foregoing, and the like. All such obvious variations are within the full intended scope of the appended claims.

## Claims

1. An amide ether block copolymer connected via amide linkages and substantially free of ester linkages, and being of the general formula

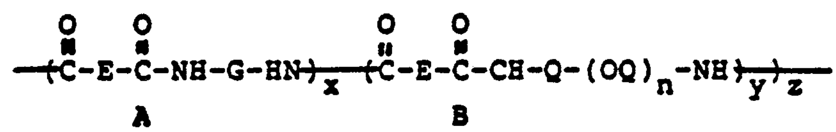

wherein units A comprise amide units comprising from about 40 to about 95 percent by weight of said block copolymer and units B comprise soft polyether segments and amide connecting units comprising from about 60 to about 5 percent by weight of said copolymer wherein E is selected from divalent alkyl, aryl, cycloalkyl, aralkyl and alkylaryl groups of from 2 to 30 carbon atoms or a mixture of any of the foregoing, optionally substituted with at least one of chlorine, bromine, fluorine, nitro, nitrile, alkyl of from 1 to 6 carbon atoms, alkoxy of from 1 to 6 carbon atoms or aryl of from 6 to 20 carbon atoms; G is a divalent alkyl, aryl, cycloalkyl, aralkyl or alkaryl group of from about 2 to about 30 carbon atoms or a mixture of any of the foregoing, optionally interrupted with alkylene, arylene, carbonyl, ether, amino or sulfur-containing groups optionally sustituted with at least one of chlorine, bromine, fluorine, nitro, nitrile, alkyl of from 1 to 6 carbon atoms, alkoxy of from 1 to 6 carbon atoms or aryl of from 6 to 20 carbon atoms; Q is a linear or branched divalent alkyl or cycloalkyl group in which the group contains from about 2 to about 15 carbon atoms, n is a whole number of from about 2 to about 500 and x, y and z are each integers of from 1 to 500.

2. An amide ether copolymer as defined in Claim 1 wherein the soft ether segments B comprise from about 25 to about 45 percent by weight of said copolymer.

3. An amide ether copolymer as defined in Claim 1 wherein E is

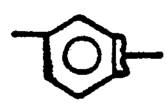

G is divalent alkylene or cycloalkylene of from about 2 to about 14 carbon atoms, Q is

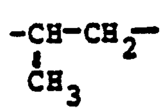

or

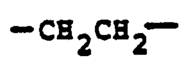

4. An amide ether copolymer as defined in Claim 1 wherein G is a residue of a diamine selected from ethylenediamine, propylenediamine, tetramethylenediamine, pentamethylenediamine, 2-methylpentamethylenediamine, hexamethylenediamine, isomeric trimethylhexamethylenediamine, 1,12-diaminododecane, bis(4-aminocyclohexyl)methane, 1,3-bis(aminomethyl)cyclohexane, 1,4-bis(aminomethyl)-cyclohexane, 1,4-piperazine, metaphenylenediamine, para-phenylenediamine, meta-xylylenediamine, paraxylylenediamine, or a mixture of any of the foregoing.

5. A polyamide polyetheramide block copolymer as defined in Claim 3 wherein G is hexamethylene, Q is

$$-\underset{CH_3}{\underset{|}{CH}}-CH_2-$$

and n is 2 to 70.

6. A process for the preparation of an amide ether copolymer as defined in Claim 1, said process comprising

(1) heating mixture of a large excess of at least one diaryl ester of a dicarboxylic acid of the formula

$$Ar\text{-}O\text{-}\overset{O}{\overset{\|}{C}}\text{-}E\text{-}\overset{O}{\overset{\|}{C}}\text{-}O\text{-}Ar$$

wherein Ar represents a residue of a phenol, optionally substituted with at least one of fluorine, chlorine, bromine, nitro, nitrile or alkyl of from 1 to 6 carbon atoms or alkoxy of from 1 to 6 carbon atoms and E is as defined in Claim 1 with a diamino group terminated polyether glycol of the formula

$R^2HN\text{-}Q\text{-}(OQ)_n\text{-}NHR^2$

wherein Q and n are as defined in Claim 1 and $R^2$ is hydrogen or alkyl of from 1 to 10 carbon atoms; and

(2) adding to the product of step (1) an amine of the formula

$R^2HN\text{-}G\text{-}NHR^3$

wherein G is as defined in Claim 1 and $R^2$ is hydrogen or alkyl of from 1 to 10 carbon atoms, and heating the mixture at a temperature above that at which a homogeneous melt is obtained until formation of said amide ether block copolymer is substantially complete.

7. A process as defined in Claim 7 wherein the diaryl ester used in step (1) comprises a diaryl terephthalate, a diaryl isophthalate or a mixture thereof.

8. A process as defined in Claim 7 wherein the diaryl ester comprises diphenyl terephthalate.

9. A process as defined in Claim 7 wherein the diaryl ester comprises diphenyl isophthalate.

10. A process as defined in Claim 6 wherein the diprimary amine used in step (1) comprises an amino terminated polyethylene oxide or polypropylene oxide.

11. A process as defined in Claim 10 wherein the amine comprises a diprimary or disecondary amino terminated polyethylene oxide.

12. A process as defined in Claim 10 wherein the amine comprises a diprimary or disecondary amino terminated polypropylene oxide.

13. A process as defined in Claim 6 wherein the diamine used in step (2) comprises ethylenediamine, propylenediamine, tetramethylenediamine, pentamethylenediamine, 2-methylpentamethylenediamine, hexamethylenediamine, isomeric trimethylhexamethylenediamine, 1,12-diaminododecane, bis(4-aminocyclohexyl)methane, 1,4-piperazine, 1,3-bis(aminomethyl)cyclohexane, 1,4-bis(aminomethyl)-cyclohexane, meta-phenylenediamine, para-phenylenediamine, meta-xylylenediamine, paraxylylenediamine, or a mixture of any of the foregoing.

14. A process as defined in Claim 6 comprising heating a mixture of diphenyl isophthalate and polyoxypropylene diamine and thereafter adding to the mixture hexamethylenediamine and heating under the conditions described.

15. A thermoplastic elastomer prepared in a melt phase process by the interchange of an excess of a diaryl ester of a dicarboxylic acid with di-primary or disecondary amino-terminally substituted polyalkylene ether to produce a polyetherpolyamide having diaryl ester terminal groups and further interchanging the said polyetherpolyamide having diaryl ester groups with a diamine and a diaryl ester to form a polyamide polyether block copolymer connected via amide linkages substantially free of ester linkages, and comprising from about 5 to about 60 percent by weight of polyether segments based on the total weight of said amide ether block copolymer.

16. A thermoplastic elastomer as defined in Claim 15 wherein the diaryl ester comprises diphenyl terephthalate, diphenyl isophthalate or a mixture thereof.

17. A thermoplastic elastomer as defined in Claim 15 wherein said diamino-terminally-substituted polyalkylene ether comprises a poly(propylene glycol diamine) or a poly(ethyleneglycol diamine).

18. A thermoplastic elastomer as defined in Claim 15 wherein said diamine comprises a diprimary amine or disecondary amine wherein the amine groups are separated by a divalent straight or branched chain or alicyclic group of from about 2 to about 14 carbon atoms, optionally interrupted with alkylene, carbonyl, ether, arylene, amino or sulfur groups.

19. A thermoplastic elastomer as defined in Claim 18 wherein said diamine comprises ethylenediamine, propylenediamine, tetramethylenediamine, pentamethylenediamine, 2-methylpentamethylenediamine, hexamethylenediamine, isomeric trimethylhexamethylenediamine, 1,12-diaminododecane, bis(4-aminocyclohexyl)methane, 1,4-piperazine, 1,3-bis(aminomethyl)cyclohexane, 1,4-bis(aminomethyl)-cyclohexane, meta-phenylenediamine, para-phenylenediamine, meta-xylylenediamine, paraxylylenediamine, or a mixture of any of the foregoing.

European Patent Office

# EUROPEAN SEARCH REPORT

Application Number

EP 88 11 6250

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 567 249 (D. FOX et al.) * claims 1 - 6, 10; column 2, lines 7 - 68 * | 6 - 9, 13 - 16, 18, 19 | C 08 G 69/40<br>C 08 G 69/28 |
| A | EP-A-0 201 434 (RHONE-POULENC) * claims; examples * | 1, 6, 15 | |
| A | DE-A-3 006 961 (INVENTA) * claims 1 - 5; example * | 1 | |
| A | PATENT ABSTRACTS OF JAPAN vol. 11, no. 163 (C-424) (2610), 26th May 1987; & JP - A - 61 293 223 (TOKYO INSTITUT OF TECHNOLOGY), 24-12-86 | 1 | |
| A | PATENT ABSTRACTS OF JAPAN vol. 11, no. 229 (C-436) (2676), 25th July 1987; & JP - A - 62 43417 (TORAY IND), 25-02-87 | 6, 15 | |
| D,A | DE-A-2 146 162 (VICTOR WOLF) * claims * | 1 | TECHNICAL FIELDS SEARCHED (Int. Cl.4)<br>C 08 G 69/00 |

The present search report has been drawn up for all claims

| Place of search | Date of completion of the search | Examiner |
|---|---|---|
| BERLIN | 16-01-1989 | BOEKER R.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)